# FASCICULE DE BREVET EUROPEEN

(11) **EP 3 269 526 B1**
(45) Date de publication et mention de la délivrance du brevet: **25.09.2019**
(21) Numéro de dépôt: 17181664.8
(22) Date de dépôt: 17.07.2017
(51) Int. Cl.: B29C 45/00, B09B 3/00, B29K 105/26

(54) **RECYCLAGE DES PEINTURES EN POUDRE THERMODURCISSABLES PAR MOULAGE PAR INJECTION AVEC UN MATÉRIAU THERMOPLASTIQUE**
RECYCLING VON WÄRMEHÄRTBAREN PULVERLACKEN DURCH SPRITZGIESSEN MIT EINEM THERMOPLASTISCHEN MATERIAL
RECYCLING OF HEAT-SETTING POWDERED PAINTS BY INJECTION MOULDING WITH A THERMOPLASTIC MATERIAL

(30) Priorité: 15.07.2016 FR 1656801
(43) Date de publication de la demande: 17.01.2018
(73) Titulaire: CYCL-ADD, 01430 Maillat (FR)
(72) Inventeur: GUERRY, Hervé, 01430 MAILLAT (FR)
(74) Mandataire: Agasse, Stéphane

(56) Documents cités:
- WO-A1-93/17851
- JP-A- H 069 793
- JP-B2- 3 224 070
- US-A1- 2014 303 267

## Description

L'invention concerne un procédé de recyclage de déchets des peintures en poudre thermodurcissables.

Il est parfaitement connu pour l'homme du métier d'utiliser des poudres de matériaux thermodurcissables dans le domaine d'application de la peinture, et ce en mettant en oeuvre notamment la technique de la pulvérisation.

Ces poudres ont une taille comprise entre 5 et 150 µm, généralement moins de 50 µm.

A la différence des peintures liquides conventionnelles, les peintures en poudre (aussi appelées poudres de revêtement) ne contiennent pas de solvant.

Il existe deux principaux types de peintures en poudre : les peintures en poudre thermoplastiques et les peintures en poudre thermodurcissables. Elles ont pour caractéristique d'avoir 100% d'extrait sec.

Les compositions de peintures en poudre thermodurcissables comprennent les quatre éléments principaux suivants :
1) un liant composé d'un couple résine-durcisseur ou résine-résine,
2) des pigments,
3) des charges,
4) des additifs.

Le liant est le constituant principal de la peinture en poudre. Il assure le lien entre tous ses constituants, ainsi que l'adhérence de la peinture sur l'objet à revêtir. Il est le constituant qui contribue à la résistance aux contraintes mécaniques et chimiques, ainsi qu'à la tenue au vieillissement de ladite peinture en poudre.

Les résines entrant dans la composition des peintures en poudre thermodurcissables se répartissent selon les cinq familles suivantes :
1) les résines époxydiques (par exemple le diglycidyléther du bisphénol A utilisé avec comme durcisseur un produit aminé dérivé de dicyandiamide),
2) les résines polyesters (par exemple une résine polyester carboxylée utilisée avec comme durcisseur un isocyanurate de triglycidyle ou un hydroxy alkyl amide),
3) les résines époxydiques-polyesters - dites « résines mixtes » (par exemple une résine polyester carboxylée et une résine époxydique de type diglycidyléther du bisphénol A),
4) les résines polyuréthanes (par exemple une résine de polyuréthane hydroxylée utilisée avec comme durcisseur un prépolymère d'isocyanate),
5) les résines acryliques (par exemple une résine acrylique hydroxylée ou aminée utilisée avec comme durcisseur un prépolymère d'isocyanate).

Les trois premières familles sont les plus couramment utilisées dans la composition des peintures en poudre thermodurcissables.

Dans la présente description qui suit, en ce qui concerne les compositions de peintures en poudre thermodurcissables, on emploiera les termes de « résine thermodurcissable » ou le terme plus général de « résine » pour désigner aussi bien les résines que les durcisseurs détaillés ci-dessus dont sont composés les liants desdites compositions de peintures.

Les pigments peuvent être des pigments minéraux ou organiques. Ils procurent la couleur et l'opacité à la peinture. Ce sont des solides pulvérulents, de granulométrie très fine (inférieure à 1 µm), minéraux ou organiques, insolubles dans le milieu de dispersion.

Les charges sont des matières solides minérales et pulvérulentes dont la fonction est notamment d'abaisser le prix de revient de la composition de peinture, tout en ayant un impact sur son aspect final. Elles améliorent certaines propriétés rhéologiques ou physiques telles que la dureté, l'imperméabilité ou la résistance à la corrosion. Les principales charges sont des sulfates, des carbonates, des oxydes et des silicates.

Enfin, des additifs peuvent faire partie des constituants des compositions de peintures en poudre. Il s'agit d'adjuvants qui confèrent certaines propriétés spécifiques à la poudre ou au film de peinture obtenu sur l'objet à revêtir telles que le tendu de surface, le matage, le dégazage, l'aptitude à la fluidité. De tels additifs peuvent comprendre notamment des agents de tension, des agents de matage, des agents de dégazage, des additifs à effets spéciaux tels que texturés, grainés ou givrés.

Les compositions des peintures en poudre thermodurcissables varient selon les applications auxquelles on destine lesdites peintures.

Cependant, la technique de revêtement avec des peintures en poudre occasionne une perte conséquente des poudres utilisées qui est de l'ordre de 40% en masse. En effet, lors de la pulvérisation de la peinture sous forme de poudres sur un objet à revêtir, lesdites poudres sont temporairement fixées sur l'objet par effet électrostatique, puis réticulées par chauffage. Plus précisément, il s'agit des liants (résine-résine et résine-durcisseur) détaillés ci-dessus et qui font partie des compositions de ces poudres de peinture qui réticulent. Il se forme alors un film à la surface de l'objet. Une quantité importante des poudres ne se dépose pas sur l'objet et constitue donc un déchet qui est généralement évacué par aspiration. La quantité de poudres ainsi récupérées et non utilisées représente un pourcentage massique très important de la quantité initiale de poudres.

En outre, des déchets de poudres de peintures sont produits dans la chaîne de fabrication desdites poudres. Par exemple, ces déchets de poudres peuvent provenir d'appareils de filtration.

Enfin, les déchets de peintures en poudre peuvent également provenir d'un stock de poudres non utilisées et dont la date de péremption est dépassée.

C'est pourquoi dans le cadre de la présente invention, on entend par déchets de peintures en poudre thermodurcissables :
- les déchets qui sont produits au cours de la fabrication desdites poudres ;
- les déchets générés lors de la pulvérisation desdites poudres, à savoir les poudres qui ne sont pas fixées sur l'objet à revêtir ;
- les déchets constitués par les poudres de peintures non utilisées avant leur date de péremption, autrement dit les peintures en poudre périmées.

Dans ces déchets de poudres de peintures, il convient de noter que les liants (qui sont composés de résines et éventuellement de durcisseurs) entrant dans la composition desdites poudres n'ont pas encore réticulé.

Ces déchets de peintures en poudre sont toxiques. C'est pourquoi, ils sont soumis à des règles environnementales très strictes qui engendrent des coûts pour leur récupération et leur traitement. En effet, les peintures en poudre thermodurcissables ont généralement des structures chimiques telles qu'il n'est pas évident et de manière économique valable de les traiter. Il en résulte un coût important pour détruire ces déchets.

Parmi les solutions de traitement de ces déchets de peintures en poudre thermodurcissables, on peut citer leur incinération ou bien leur utilisation comme produits de complément dans les cimenteries. Cependant, l'incinération de ces produits a notamment pour inconvénient de produire une certaine quantité de dioxyde de carbone.

En outre, on connaît des solutions de recyclage des peintures en poudre thermodurcissables.

Plusieurs documents de brevet décrivent des procédés de recyclage des peintures en poudre qui consistent en leur réinjection dans le procédé de fabrication desdites peintures.

Cependant, ces déchets sous forme de poudres sont volatiles de sorte qu'il est difficilement envisageable de les réutiliser tels quels dans un processus de fabrication de peintures en poudre, en considérant par exemple les difficultés de transport et de réinjection dans ledit processus de fabrication.

C'est pourquoi, des solutions ont été proposées pour assurer le compactage des fines de peintures en poudre. A cet égard, on peut citer la demande EP 1 655 083 A1 qui décrit un procédé de réutilisation des déchets de peintures en poudre en vue de les réinjecter dans le processus de fabrication de poudres après avoir compacté les fines de poudres selon des cadences de production élevées pour obtenir des produits compactés présentant des propriétés mécaniques et physique compatibles avec lesdites poudres. Au cours du procédé de compactage faisant l'objet de cette demande de brevet européen, on soumet les fines à une opération de compression uniaxiale rotative à grande vitesse pour obtenir, en continu, une pluralité de pastilles de densité, de poids et de dimensions déterminées pour les réinjecter en remplacement des charges dans une partie d'une installation de fabrication de peintures en poudre comprenant notamment un poste de mélange des charges et pigments, un poste d'extrusion, un poste de broyage.

En outre, une autre solution de recyclage des peintures en poudre consiste en leur utilisation dans un procédé de fabrication d'un matériau composite. A cet égard, on peut citer la demande WO 2013/128133 A2 qui décrit un procédé de recyclage des déchets de peintures en poudre consistant à mélanger ces déchets avec du sable de récupération, à disposer ledit mélange dans un moule et à chauffer l'ensemble dans un four, puis à démouler le produit obtenu après refroidissement, lequel constitue un produit fini ou semi-fini. Optionnellement, on peut disposer dans le mélange avant chauffage un ou plusieurs inserts. Le produit ainsi obtenu grâce aux déchets de peinture peut être utilisé dans l'industrie du bâtiment et/ou des travaux publics, ainsi que pour la fabrication d'éléments de décoration.

Par ailleurs, la demande de brevet JP H06 9793 A décrit un procédé de recyclage des peintures en poudre thermodurcissables qui comprend les étapes suivantes :
- une étape de mélange de déchets de peinture contenant une résine thermodurcissable non réticulée avec une résine de polyoléfine ;
- une étape de moulage pouvant consister en un moulage par pressage à chaud ou un moulage par injection de manière à obtenir une pièce moulée ;
- une étape de réticulation de la résine thermodurcissable non réticulée que contient la pièce moulée (par exemple par chauffage de la pièce moulée dans le moule).

Le brevet JP 3 224070 B2 décrit un procédé de recyclage des peintures en poudre thermodurcissables qui comprend les étapes suivantes :
- une étape de mélange de déchets de peinture contenant une amino résine avec une résine de polyoléfine et une poudre d'urée ;
- une étape de moulage pouvant consister en un moulage par pressage à chaud ou dans certains cas en un moulage par injection de manière à obtenir une pièce moulée ;
- une étape de réticulation de l'amino résine non réticulée que contient la pièce moulée.

Dans ce procédé, le formaldéhyde généré de l'amino résine est capturé par l'urée. Cela évite ainsi le dégagement de ce gaz.

Dans les procédés décrits dans ces documents de brevet japonais, la réticulation de la résine thermodurcissable est réalisée après le moulage de la pièce moulée ; ce qui induit les inconvénients suivants :
- le mélanges des différents constituants de la pièce moulée n'est pas homogène ;
- la pièce moulée présente des défauts : elle est poreuse. En effet, des bulles peuvent être présentes à l'intérieur de ladite pièce. Pour éviter cet inconvénient, il peut être nécessaire de dégazer pendant la réticulation dans le moule.

Ainsi, on est toujours à la recherche de nouvelles solutions de recyclage des peintures en poudre, et notamment de peintures en poudre thermodurcissables.

L'inventeur de la présente invention a mis au point un nouveau procédé de recyclage des déchets de peintures en poudre thermodurcissables qui consiste à incorporer ces déchets en tant que charges au cours d'un procédé de moulage par injection d'une pièce en un matériau thermoplastique dans un dispositif de moulage par injection qui est équipé d'une vis de plastification.

La présente invention a pour objet un procédé de recyclage des déchets de peintures en poudre thermodurcissables qui est réalisé dans un dispositif de moulage par injection (autrement dit une presse à injecter) qui est équipé d'une vis de plastification d'une pièce en un matériau thermoplastique qui comprend au moins les étapes suivantes :
a) on dispose d'un mélange contenant des pastilles de déchets de peintures en poudre thermodurcissables, des granulés de matériau thermoplastique, et optionnellement au moins un composant auxiliaire ;
b) on alimente la vis de plastification dudit dispositif de moulage par injection avec ledit mélange ;
c) on achemine ledit mélange à l'avant de la vis de plastification ; puis
d) on injecte ledit mélange à l'intérieur d'un moule présentant la forme souhaitée de la pièce à mouler de manière à obtenir une pièce moulée en le matériau thermoplastique.

Les déchets de peintures en poudre thermodurcissables sont tels que ceux qui ont été décrits ci-dessus.

Les déchets de peintures en poudre thermodurcissables ne peuvent pas être introduits directement dans la vis de plastification du dispositif de moulage par injection, car les frottements seraient trop importants et bloqueraient la vis de plastification.

En effet, les poudres deviendraient compactes et empêcheraient la matière thermoplastique d'avancer dans la vis de plastification. Par exemple, si l'on alimente la vis de plastification avec un mélange contenant, en pourcentages massiques exprimés par rapport à la masse totale dudit mélange, 5% de déchets de peintures en poudres thermodurcissables et 95% de matériau thermoplastique, cela crée des amalgames qui empêchent ledit mélange d'avancer dans la vis de plastification. Comme cela se situe dans la zone froide de la vis de plastification, cet amalgame ne fond pas et la presse est bloquée.

En outre, les pastilles de déchets de peintures en poudre thermodurcissables présentent les avantages suivants :
- elles peuvent être mélangées de manière homogène avec les granulés de matériau thermoplastique dans le dispositif de moulage par injection, et ce du fait notamment de leurs similarités de forme ;
- les jeux entre la vis de plastification et le fourreau sont d'une taille telle que cela permet l'avancement des pastilles dans la vis de plastification.

Ainsi, il est essentiel de disposer de pastilles de déchets de peintures en poudre thermodurcissables pour mettre en oeuvre le procédé de recyclage selon l'invention.

Les compositions des peintures en poudre thermodurcissables qui sont utilisées au cours du procédé de recyclage ont été décrites ci-dessus.

De manière préférée, lesdites pastilles contiennent, en pourcentages massiques exprimés par rapport à la masse totale d'une pastille, au moins :
- entre 6% et 91%, de préférence entre 40% et 80%, de résine polyester ;
- entre 0% et 40%, de préférence entre 0% et 15%, de résine époxy.

Dans un mode de réalisation de l'invention, lesdites pastilles contiennent en outre, en pourcentages massiques exprimés par rapport à la masse totale d'une pastille :
- entre 2% et 5% d'additif;
- entre 5% et 80%, de préférence entre 10% et 50%, de charge ;
- entre 2% et 5% de pigment.

Comme expliqué ci-dessus, outre les pigments, les compositions de peintures en poudre thermodurcissables peuvent comprendre des charges et des additifs.

Les pigments sont des solides pulvérulents, de granulométrie très fine (à savoir inférieure à 1 µm).

Les compositions de peinture en poudre thermodurcissables peuvent comprendre des pigments minéraux. Il peut s'agir de :
- pigments de couleur blanche (par exemple l'oxyde de titane, le lithopone, l'oxyde de zinc) :
- pigments de couleur bleue (par exemple le bleu outremer (un mélange de silicate d'aluminium et de sodium polysulfuré), le ferrocyanure ferrique (FeNH₄Fe(CN)₆) et le bleu de cobalt (CoO)m(Al₂O₃)ₙ)) ;
- pigments de couleur verte (par exemple l'oxyde de chrome (Cr₂O₃), l'oxyde de chrome hydraté (CrO(OH)), le vert de chrome (à savoir un mélange de jaune de chrome et de ferrocyanure ferriques) ;
- pigments de couleur jaune (par exemple jaune bismuth (BiOV), jaune titanate chrome (Ti,Cr,Sb)O₂, jaune titanate nickel (Ti,Ni,Sb)O₂, oxyde de fer (FeO(OH)), jaune de zinc (4ZnO,4CrO₃,K₂O,3H₂O), jaune de chrome (xPbCrO₄ + yPbSO₄), chromate de plomb (PbCrO₄), jaune de cadmium (CdS + ZnS) ;
- pigments de couleur orangée (par exemple orangé de chrome (xPb CrO₄,yPbO), orangé de molybdène Pb(Cr,Mo,S)O₄) ;
- pigments de couleur rouge (par exemple oxyde de fer (αFₑ2O₃), rouge de molybdène Pb(Cr,Mo,S)O₄, rouge de cadmium (CdS,CdSe)) ;
- pigments de couleur brune (par exemple l'oxyde de fer Fe₂O₃,FeO,Fe(OH)₂) ;
- pigments de couleur noire (par exemple l'oxyde de fer (FeO₄)).

Les compositions de peintures en poudre thermodurcissables peuvent comprendre des pigments organiques. Il peut s'agir de :
- dérivés de phtalocyanine de couleurs bleu et vert ;
- dérivés azoïques (dérivés de benzidine, toluidine, dinitraniline) de couleurs allant du jaune au rouge ;
- pigments isoindoline ou isoindolinone, à nuance jaune ;
- pigments à base de di-keto-pyrrolopyrrole, à teintes orange, rouge.
- dérivés d'anthraquinone, de pérylène ou de thioindigo qui peuvent être jaunes, orangés, rouges, violets, bleus ou marrons ;
- pigments de quinacridone de couleurs violet et rouge ;
- pigments de dioxazine de couleurs violet et rouge ;
- noir de carbone.

Les compositions de peintures en poudre thermodurcissables peuvent comprendre des pigments à effets spéciaux qui sont des combinaisons de pigments minéraux et organiques et qui permettent de réaliser des peintures présentant des aspects particuliers : martelé, métallisé, bronze, moiré. Il peut s'agir de pigments d'aluminium pelliculant, pigment d'aluminium non pelliculant, pigments mica, pigments de cuivre et d'alliage de cuivre.

Les compositions de peintures en poudre thermodurcissables peuvent comprendre des charges. Il peut s'agir de :
- sulfates (par exemple barytine ou sulfate de baryum) ;
- carbonates (par exemple Carbonate de calcium (CaCO₃), dolomie (CaCo₃, MgCO₃)) ;
- oxydes (par exemple les silices (SiO₂), quartz, diatomées) ;
- silicates (par exemple kaolin, talc, mica, bentonite, silicate de calcium).

Les compositions de peinture en poudre thermodurcissables peuvent comprendre des additifs. Il peut s'agir :
- d'agents de tension (par exemple des polyacrylates tels que le polybutyral vinylique) ;
- d'agents de matage et accélérateur (par exemple des cires polyéthylènes, le pyromelliate de mono phénylimidazoline) ;
- d'agents de dégazage (par exemple la benzoïne) ;
- d'additifs à effets spéciaux : texturé (p-acétobutyrate de cellulose, butyral plyvinylique), grainé ou givré (polytétrafluoroéthylène, argile montmorillonite, vermiculé (tétraméthoxyméthyl glycoluril), martelé (les additifs à effet texturé auxquels sont ajoutés des pigments d'aluminium).

Dans des modes de réalisation de l'invention, lorsqu'on souhaite améliorer des propriétés de la pièce en matériau thermoplastique moulée telles que la résistance aux chocs, la rigidité, l'amélioration de la résistance aux UV, l'amélioration de la résistance au feu, outre les divers additifs, pigments et charges que peuvent contenir les peintures en poudre thermodurcissables et qui ont été détaillés ci-dessus, lesdites pastilles peuvent en outre comprendre au moins un composé complémentaire, de préférence au moins un composé complémentaire choisi parmi le talc, le carbonate de calcium, le noir de carbone, les additifs anti-UV (par exemple l'oxyde de zinc), le polyuréthane, les fibres textiles (par exemple du nylon ou des aramides), les composites (par exemple des composites comprenant des fibres de verre et une résine époxy réticulée), les latex et les caoutchoucs.

Parmi ces composés complémentaires mentionnés ci-dessus, certains peuvent provenir de déchets. Par exemple, il peut s'agir de déchets de pneus, de l'industrie automobile, de meubles. Ainsi, outre le recyclage de peintures en poudre thermodurcissables, l'invention présente également l'avantage de pouvoir recycler des déchets de latex, de polyuréthane ou tout autre matériau de déchets.

De manière avantageuse, lesdites pastilles ont :
- des dimensions comprises entre 1 mm et 5 mm ;
- une épaisseur comprise entre 2 mm et 5 mm ;
- une densité est comprise entre 1,2 et 1,5.

Les pastilles peuvent avoir une forme sphérique (par exemple un diamètre compris entre 1 mm et 5 mm) ou bien une forme complexe dont les dimensions sont avantageusement comprises entre 1 mm et 5 mm.

De manière préférée, le pourcentage massique de poussières desdites pastilles qui est exprimé par rapport à la masse totale desdites pastilles n'excède pas 10%.

Préférentiellement, lesdites pastilles ne comprennent pas plus de 5% de pastilles dont le diamètre est supérieur à 8 mm, ce pourcentage étant exprimé par rapport à la masse totale desdites pastilles.

Les pastilles telles que décrites ci-dessus peuvent être obtenues par tout procédé de mélange à l'état fondu qui est réalisé dans une extrudeuse configurée pour fondre par chauffage des résines et qui est parfaitement à la portée de l'homme du métier.

Les pastilles peuvent être fabriquées de la manière suivante : au moyen d'une extrudeuse (par exemple une extrudeuse à deux vis), on mélange les constituants des pastilles qui ont été décrits ci-dessus, à savoir au moins une peinture en poudre thermodurcissable et optionnellement au moins un composé complémentaire de manière à obtenir un mélange homogène.

En général, ce mélange homogène est obtenu à partir d'une étape de « prémix » ou « d'alimentation séparée » au cours de laquelle tous les constituants desdites pastilles sont dispersés à haute vitesse. La réalisation de cette étape de mélange mécanique aboutit à la dispersion dans les résines fondues (et éventuellement durcisseurs) que comprennent les peintures en poudre thermodurcissables des divers additifs, pigments et charges qu'elles contiennent et éventuellement des composés complémentaires qui ont été ajoutés pour fabriquer lesdites pastilles.

Ce mélange homogène à l'état fondu passe ensuite au travers d'une filière, par exemple de forme rectangulaire de manière à obtenir des feuilles (par exemple d'épaisseur de 3 mm) que l'on solidifie par refroidissement (par exemple sur des plateaux) et dans lesquelles on découpe des pastilles avec une machine à découper.

Le refroidissement peut être réalisé par un séchage sous air. Bien que cela puisse être lent, cela présente l'avantage que les pastilles ne captent d'humidité.

Dans d'autres modes de réalisation de l'invention, les pastilles sont obtenues à partir de ce mélange homogène à l'état fondu qui est solidifié après sa sortie de filière par voie de granulation de joncs, de granulation annulaire à eau ou de granulation sous eau.

Les pastilles ainsi fabriquées sont avantageusement tamisées pour obtenir des pastilles de granulométrie contrôlée et appropriée qui permet leur introduction dans une trémie d'alimentation d'un dispositif de moulage par injection. Au cours de cette étape, la poussière engendrée est généralement inférieure à 2%. Les pastilles sont ensuite stockées dans des sacs étanches pour éviter toute reprise d'humidité qui serait néfaste avec le procédé de moulage par injection.

Les granulés de matériau thermoplastique peuvent comprendre au moins un matériau thermoplastique choisi parmi :
- les polyoléfines (par exemple les polyéthylènes (PE) notamment les PEHD (à savoir les polyéthylènes haute densité), les PEBD (à savoir les polyéthylènes basse densité) et les LLDPE (les polyéthylènes basse densité linéaire), ainsi que le polypropylène (PP) ;
- les polyvinyliques (par exemple le polychlorure de vinyle (PVC), le polyacétochlorure de vinyle, le polyalcool vinylique, le polyacétate de vinyle, le polychlorure de vinylidène, le polybutyral et polyformal de vinyle ;
- les polystyréniques (par exemple le polystyrène (PS), les copolymères tels que l'acrylonitrile butadiène styrène (ABS), le styrène-acrylonitrile (SAN), le méthylméthacrylate-butadiène-styrène (MBS), le poly(styrène-b-butadiène-b-styrène (SB) (élastomère thermoplastique) et le polystyrène-b-polyisoprène-b-polystyrène (SIS)) ;
- les polyacryliques et polyméthacryliques (par exemple polyméthacrylate de méthyle (PMMA), polyacrylonitrile et copolymères) ;
- les polyacétals (par exemple polyoxyméthylène (POM), polyformaldéhyde et copolymères) ;
- les polyamides (par exemple PA6, PA11, PA12, PA6-6, PA 6-10) ;
- les polycarbonates ;
- les polyesters linéaires (par exemple polyéthylène téréphtalate, polybutylène téréphtalate) ;
- les cellulosiques (par exemple acétate de cellulose, nitrate de cellulose) ;
- les polymères fluorés ;
- les polysulfones ;
- les polysulfures de phénylène.

Le mélange de l'étape a) contient au maximum 50% de pastilles, ce pourcentage étant un pourcentage massique exprimé par rapport à la masse totale dudit mélange.

De manière préférée, ledit mélange de l'étape a) comprend entre 10% et 50%, plus préférentiellement entre 10% et 30%, encore plus préférentiellement entre 10% et 20% de pastilles, ces pourcentages étant des pourcentages massiques exprimés par rapport à la masse totale dudit mélange de l'étape a).

Dans des modes de réalisation de l'invention, outre les granulés de matériau thermoplastique et lesdites pastilles, le mélange de l'étape a) comprend au moins un composant auxiliaire. De préférence, ce composant auxiliaire est choisi parmi les plastifiants, les charges, les pigments, les antioxydants, les stabilisants, les ignifugeants, les lubrifiants et les antistatiques.

Les plastifiants sont des substances de faible volatilité que l'on ajoute au mélange en vue de modifier principalement les propriétés plastiques et élastiques du matériau thermoplastique, et ce sans changer sa nature chimique. Les molécules du plastifiant agissent en affaiblissant localement les forces de cohésion intermoléculaires et rendent ainsi possible le déplacement de segments de chaînes macromoléculaires les unes par rapport aux autres, ce qui a pour effet de diminuer la rigidité de l'édifice moléculaire du matériau thermoplastique.

Les familles de plastifiants les plus utilisées sont :
- les plastifiants primaires : les phtalates, les adipates et sébaçates, les huiles époxydées, les plastifiants polyesters, les phosphates, les glycols et leurs dérivés ;
- les plastifiants secondaires : les esters d'acides gras, les dérivés organiques chlorés, les dérivés de l'acide toluène sulfonique.

Les charges sont des substances organiques ou minérales, végétales ou synthétiques qui sont ajoutées au matériau thermoplastique de manière à modifier ses propriétés physiques, thermiques, mécaniques et électriques ou simplement d'en abaisser le prix de revient.

Les propriétés ainsi conférées au matériau thermoplastique dépendent de la nature et de la forme de la charge utilisée (poudres, fibres, filaments, feuilles, petites billes), ainsi que de la quantité ajoutée. Les charges minérales améliorent les propriétés électriques, la résistance à la chaleur et à l'humidité. Elles permettent également d'augmenter la densité de la matière à mouler et de diminuer le retrait.

D'une manière générale, les charges granulaires ont une faible interaction interfaciale avec le matériau thermoplastique et se comportent comme un agent d'extension inerte qui remplace, par effet de masse, un certain volume du matériau thermoplastique. Elles réduisent le coût de l'opération de moulage, diminuent le retrait et améliorent l'aspect de surface et la résistance. Les plus utilisées sont la farine de bois, les poudres de carbonate de calcium, de kaolin, d'argile, de mica, d'ardoise, le talc, la silice, la farine de diatomées, les sulfates de baryum et de calcium, l'alumine, les noirs de carbone, le graphite colloïdal, les déchets broyés de résines synthétiques.

Les charges fibreuses donnent lieu à une interaction importante entre leur surface et la matrice du matériau thermoplastique, ce qui explique leur rôle renforçant. On obtient ainsi une meilleure tenue aux chocs et une plus grande rigidité de la pièce en matériau thermoplastique moulée par injection. Les plus couramment utilisées sont les fibres de cellulose (chanvre, jute, ramie, coton et rayonne), certaines fibres synthétiques, les fibres d'amiante, de carbone et surtout les fibres de verres.

Les pigments peuvent être minéraux (oxydes de sels métalliques de titane, plomb, chrome, manganèse, cobalt, cadmium, fer), organiques (azoïques et diazoïques copulés, colorants d'indanthène, noir d'aniline et de pétrole) ou mixtes (sels colorés d'acide organiques).

Les pigments sont ajoutés en quantité relativement faible, 0,1 à 5% au maximum par rapport à la masse du mélange de l'étape a) du procédé de recyclage selon l'invention.

L'ajout d'antioxydant ou de stabilisant dans le mélange de l'étape a) a pour but de prévenir ou simplement de retarder la dégradation des matières plastiques sous l'action de la chaleur, de la lumière et des agents oxydants de l'air.

Les stabilisants sont spécialement destinés à empêcher la dégradation thermique du matériau thermoplastique au cours de la mise en oeuvre (par exemple lors du moulage par injection) et à maintenir ses propriétés physiques et mécaniques tout au long de son utilisation.

Il existe une gamme très variée de produits stabilisants, tant minéraux qu'organiques. On les associe souvent les uns aux autres pour obtenir des effets synergétiques, c'est-à-dire une plus grande efficacité du mélange par rapport à celle de chacun des constituants.

Leurs teneurs massiques dans le mélange de l'étape a) du procédé de recyclage selon l'invention sont assez faibles (entre 0,25 et 3% de la masse dudit mélange de l'étape a)). Il s'agit par exemple :
- de sels métalliques : stéarates d'aluminium, de zinc, de plomb, de sodium, de cadmium, de magnésium, de calcium ou de baryum ; laurates de baryum de cadmium, d'étain ; maléates, phtalates et naphténates ;
- de composés organo-métalliques : dilaurate et maléate de dibutylétain et mercaptides de dialkylétain ;
- de dérivés époxydes : huiles époxydées de soja ou de ricin.

Les absorbeurs d'ultra-violets ont pour fonction d'éviter les réactions de photo dégradation des polymères. Les plus utilisés sont des benzophénones et des benzotriazoles. On emploie aussi des complexes du nickel, du noir de carbone, du dioxyde de titane et de l'oxyde de zinc.

Les anti-oxydants s'opposent généralement à la rupture des liaisons dans les macromolécules sous l'action de l'oxygène. Ce sont des amines aromatiques comme les phénylnaphtylamines, des phénols, des phosphites organiques.

Les ignifugeants ou retardateurs de combustions ont pour rôle d'améliorer le comportement au feu. Ce sont des composés phosphorés, des composés halogénés, des composés de l'antimoine, des composés du bore, des hydrates d'aluminium,
Les lubrifiants ont pour but d'éviter que le matériau thermoplastique n'adhère au métal des outillages. Ce sont par exemple des stéarates métalliques, des esters d'acide gras, des cires d'hydrocarbures.

Les antistatiques sont destinés à éviter l'accumulation des charges électriques. Ce sont par exemple des amines, des sels d'ammonium et des phosphates organiques.

Ainsi, au vu des constituants très variés qui ont été détaillés ci-dessus et qu'est susceptible de comprendre le mélange de l'étape a), ce dernier peut être un mélange complexe.

La pièce en matériau thermoplastique moulée par injection selon le procédé de recyclage selon l'invention peut avoir de nombreuses et variées compositions. Sa composition est établie en fonction de l'application à laquelle elle est destinée.

Dans les modes de réalisation de l'invention dans lesquels le mélange de l'étape a) comprend en outre au moins un composant auxiliaire :
- une première partie de ce composant auxiliaire a été incorporée dans le matériau thermoplastique au cours de la fabrication des granulés de matériau thermoplastique et la seconde partie de ce composant auxiliaire est incorporée dans la trémie d'alimentation du dispositif de moulage par injection,
   ou
- la totalité de ce composant auxiliaire a été incorporée dans le matériau thermoplastique au cours de la fabrication des granulés de matériau thermoplastique,
   ou
- la totalité de ce composant auxiliaire est incorporée dans la trémie d'alimentation du dispositif de moulage par injection.

De manière préférée, ce sont les pigments (notamment les anti-ultra-violets) et les charges minérales qui sont incorporés dans la trémie d'alimentation.

Les additifs, pigments et charges des pastilles qui sont contenus dans les peintures en poudre thermodurcissables, et le cas échéant les composés complémentaires qui ont été incorporés au cours de la fabrication desdites pastilles, ainsi que les composants auxiliaires qui ont été incorporés dans les granulés de matériau thermoplastique au cours de leur fabrication et/ou qui sont incorporés dans la trémie d'alimentation ont une fonction importante car, ils peuvent présenter des structures chimiques telles qu'il se crée des liaisons chimiques par réticulation avec les résines des peintures en poudre thermodurcissables, ainsi qu'avec le ou les polymères thermoplastique(s) du matériau thermoplastique au cours de l'avancée du mélange dans la vis de plastification. Ce sont en général des liaisons chimiques de surface. On obtient un mélange chimique homogène.

Comme cela a été expliqué ci-dessus, les résines que contiennent les déchets de peintures en poudre thermodurcissables n'ont pas encore réticulé. Elles vont réticuler au sein de la vis de plastification, et ainsi il se crée les liaisons chimiques telles que mentionnées juste ci-dessus.

Le procédé de recyclage selon l'invention présente l'avantage que des pastilles de déchets de peintures en poudre thermodurcissables sont ajoutées non pas uniquement en tant que simples charges inertes pour le moulage par injection d'une pièce en matériau thermoplastique (notamment pour en abaisser son prix de revient), mais plus précisément en tant que charges dites « actives » ou autrement dit « réactives », et ce du fait que ces pastilles comprennent notamment des composés non encore réticulés (à savoir des résines) qui vont réticuler dans la vis de plastification de manière à ce que des liaisons chimiques telles que détaillées ci-dessus se créent.

A l'étape a) du procédé de recyclage, les pastilles de déchets de peintures en poudre thermodurcissables, les granulés de matériau thermoplastique, et optionnellement des composants auxiliaires sont introduits dans une trémie d'alimentation d'un dispositif de moulage par injection.

A l'étape b) du procédé de recyclage, le mélange qui contient au moins les granulés d'un matériau thermoplastique, les pastilles, et éventuellement les composants auxiliaires tombe par gravité dans la vis de plastification. Cette vis tourne et recule en même temps que le mélange fond. Au début de la vis de plastification, la température est généralement d'environ 40°C. Ensuite, tout au long du cheminement dans la vis de plastification, le mélange fond, car la température augmente progressivement par chauffage thermique et par échauffement mécanique du fait des frottements des constituants du mélange, ainsi que de leur passage dans l'entrefer (à savoir le jeu qui existe entre la vis de plastification et le fourreau) pour atteindre la température d'injection. Cette température, par exemple lorsque le matériau thermoplastique comprend des polyoléfines, est comprise entre 180 et 260°C. Le choix de la température d'injection est importante, car elle conditionne la fluidité de la matière dudit mélange : plus la matière est chaude, plus elle est fluide.

De manière avantageuse, le volume de matière dans la vis de plastification est compris entre deux et quatre fois le volume de la pièce à mouler.

Si le volume de matière dans la vis de plastification est supérieur à quatre fois celui de la pièce à mouler, une partie de la matière à mouler va rester trop longtemps dans la vis de plastification et risque ainsi d'être dégradée.

Si le volume de matière dans la vis de plastification est inférieur à deux fois celui de la pièce à mouler, le mélange des différents constituants de la pièce à mouler risque de ne pas être homogène. La pièce moulée peut alors présenter des défauts d'aspects (par exemple des traces).

Le dimensionnement et le choix de la vis de plastification sont parfaitement à la portée de l'homme du métier.

Au début de la vis de plastification (à savoir à proximité de la trémie d'alimentation), la température se situe généralement entre 40°C et 120°C de telle sorte que les pastilles fondent et deviennent liquides, tandis que le matériau thermoplastique reste sous forme de granulés. Les pastilles se mélangent ainsi rapidement au matériau thermoplastique.

Le fait que les pastilles fondent permet la diffusion des éventuels composants auxiliaires qui ont été incorporés dans la trémie d'alimentation, ainsi que des additifs, des charges, des pigments, et le cas échéant des composés complémentaires, qui sont contenus dans lesdites pastilles.

A cet égard, il convient de noter que parmi les additifs, charges, pigments et composés complémentaires qui ont été décrits ci-dessus, certains se présentaient sous forme de poudre avant leur incorporation dans lesdites pastilles ; ce qui n'aurait pas permis leur introduction directement dans la vis de plastification.

Ainsi, le fait d'avoir incorporé ces additifs, charges, pigments et composés complémentaires qui à l'origine étaient à l'état pulvérent dans la composition des pastilles est particulièrement avantageux. En effet, lorsque la résine des peintures en poudre thermodurcissables desdites pastilles va commencer à fondre, les additifs, les charges, les pigments et, le cas échéant les composés complémentaires, qui éventuellement pour certains d'entre eux étaient à l'origine sous forme pulvérulente, vont se diffuser de manière homogène au sein du matériau thermoplastique que comprend le mélange.

En d'autres termes, les résines des peintures en poudre thermodurcissables que contiennent les pastilles en fondant servent de liant aux additifs, charges, pigments présents dans la composition de ces peintures en poudre, et le cas échéant des composés complémentaires qui ont été ajoutés au cours de la fabrication desdites pastilles, ainsi qu'aux composants auxilaires précités. Ces divers additifs, charges, pigments, composés complémentaires et composants auxiliaires se retrouvent ainsi dans un milieu liquide, à une température déjà relativement importante dès lors que les résines des peintures en poudre ont fondu. Leur diffusion au sein du matériau thermoplastique est excellente.

Cette fonction de diffusion au sein du matériau thermoplastique des additifs, charges, pigments, composés complémentaires et composants auxiliaires grâce à la résine contenue dans les déchets de peintures en poudre thermodurcissables constitue un autre avantage du procédé de recyclage selon l'invention.

Ainsi, grâce à cette excellente diffusion lors du passage dans la vis de plastisfication qui induit une répartition homogène des additifs, charges, pigments, composés complémentaires et composants auxiliaires au sein du matériau thermoplastique, cela présente l'avantage que le pièce moulée ainsi obtenue avec le procédé de recyclage selon l'invention est parfaitement homogène.

Ensuite, dans la portion centrale de la vis de plastification, le polymère thermoplastique fond. Le mélange de matières résultant donc de la fusion des pastilles, puis des granulés de matériau thermoplastique devient très homogène. Des réactions de réticulation se produisent à ce niveau de la vis de plastification, ainsi que des gaz se forment. Des liaisons chimiques peuvent se créer entre le polymère thermoplastique et des composés complémentaires et composants auxilaires, ainsi qu'avec la résine contenue dans les déchets de peintures en poudre thermodurcissables. La température est de l'ordre de 140°C.

En fin de vis de plastification, avec la pression mise en oeuvre pour l'injection du mélange de matières, les gaz sont évacués en circulant entre la buse d'injection et le moule, c'est-à-dire avant que ledit mélange de matières n'entre dans le moule. Cela présente l'avantage que les pièces moulées avec le procédé selon l'invention ne présentent pas de bulles et donc pas de défaut de porosité.

La pression en sortie de vis de plastification peut être d'environ 350 bars. Cette pression dépend de la pièce à mouler et de ses dimensions.

En outre, en fin de vis de plastification, les réactions de réticulation sont encore plus importantes, car il s'agit de la zone la plus chaude de la vis de plastification. La température est comprise entre 180°C et 230 °C, de préférence entre 180°C et 220°C. Elle n'excède pas 230°C, car au-dessus de cette température, les réactions de réticulation seraient trop importantes et la formation des gaz empêcherait le dosage de la presse. En effet, le dégazage doit être contrôlé.

La température est contrôlée tout au long de la vis de plastification afin que la réticulation se fasse de manière continue et éviter qu'elle ne soit trop rapide et de manière locale ; ce qui pourrait contribuer à nuire à l'homogénéité de la pièce moulée par injection. En d'autres termes, on évite toute chauffe locale au sein de la vis de plastification (en particulier en fin de vis) afin que la réticulation se fasse de manière continue et au sein de tout le mélange fondu qui est, dans l'étape suivante du procédé, moulé.

Au cours de l'étape c) du procédé de recyclage selon l'invention, des réactions de réticulation se produisent au sein du mélange. Il s'agit de la réticulation des résines thermodurcissables que contiennent les pastilles de déchets de peinture.

Ainsi, à la différence des procédés de recyclage de déchets de peinture tels que ceux décrits dans les deux documents de brevet japonais mentionnés ci-dessus, l'originalité du procédé selon l'invention réside dans le fait que la réticulation des résines thermodurcissables (à savoir une réaction exothermique qui s'accompagne d'une libération de gaz) se produit dans la vis de plastification et donc pas dans le moule. Le dégazage du mélange de matières est réalisé avant l'incorporation de la matière à mouler dans le moule. Cela procure les avantages tels que ceux détaillés ci-dessus, à savoir notamment une bonne homogénéité du mélange des matières et l'absence de bulles au sein de la pièce moulée du fait du dégazage avant l'incorporation de la matière à mouler dans le moule.

Une fois le mélange fondu, il est stocké sur l'avant de la vis de plastification. Un piston à l'arrière de la vis de plastification permet l'injection dans le moule.

Le dosage du volume du mélange injecté est important, car il faut injecter le volume correspondant au volume du moule.

L'étape de moulage se décompose en les trois étapes suivantes :
- une phase de remplissage au cours de laquelle le piston du dispositif de moulage par injection pousse le mélange dans le moule. Cette phase est très rapide de l'ordre de quelques secondes. La pression en fin de remplissage atteint son maximum et devient très importante de 500 à 1000 bars. Le moule étant froid, la matière du mélange qui arrive au contact des parois refroidit ;
- une phase de compactage au cours de laquelle une fois le moule rempli, on continue d'alimenter le coeur de la pièce en matériau thermoplastique, car ledit matériau en refroidissant se contracte. Les pressions sont importantes : 2/3 de la pression maximale ;
- une phase de refroidissement au cours de laquelle aucune matière ne peut plus être introduite car elle est trop visqueuse. L'outillage refroidit l'ensemble de la pièce en matériau thermoplastique par conduction aux parois. Cette étape est la plus longue des trois étapes de moulage.

Ces trois étapes sont mises en oeuvre selon des paramètres appropriés qui vont dépendre de la composition de la pièce en matériau thermoplastique moulée par injection, du volume à injecter, des longueurs d'écoulement et de l'épaisseur de la pièce.

Lors des étapes de remplissage du moule, ainsi que de compactage, les réactions de réticulation se poursuivent jusqu'à la phase de refroidissement. Les gaz sont évacués au niveau de l'outillage par les plans de joint, ainsi que l'air emprisonné dans le dispositif avant l'injection. Les fortes pressions permettent d'évacuer facilement ces gaz.

En injection, pour chaque pièce, on procède à un réglage machine, avec un protocole bien déterminé :
On règle l'étape de remplissage, puis celle le compactage, et enfin celle de refroidissement.

Le tonnage de la presse, ainsi que la capacité de dosage de la presse sont calculés en fonction des caractéristiques de la pièce à mouler (volume, épaisseur de paroi, pression d'injection).

Enfin, le choix de la taille de la vis de plastification est très important. En effet, une vis de plastification trop volumineuse fera stagner la matière à hautes températures, ce qui peut la dégrader.

L'injection peut être simulée sur ordinateur avant de réaliser l'outillage. Au lancement de chaque série, les paramètres sont réajustés en fonction du résultat obtenu sur la pièce (variation de poids, d'aspect).

Comme expliqué ci-dessus, la pièce en matériau thermoplastique moulée par injection avec le procédé de recyclage selon l'invention présente une parfaite homogénéité grâce à une excellente diffusion des additifs, charges, pigments, composés complémentaires et composants auxiliaires au sein du matériau thermoplastique lors du passage du mélange dans la vis de plastification.

En outre, ladite pièce moulée présente d'excellentes propriétés mécaniques. En effet, en comparaison avec une pièce moulée de matériau thermoplastique équivalent mais dans lequel n'ont pas été ajoutées des pastilles de déchets de peintures en poudre thermodurcissables, la pièce moulée avec le procédé de recyclage selon l'invention présente :
- un module de Young plus élevé ;
- une meilleure contrainte à la rupture ;
- un plus faible allongement à la rupture.

De plus, la pièce moulée présente une bonne résistance aux chocs, ainsi qu'aux rayons UV.

Ladite pièce moulée présente l'avantage d'être parfaitement recyclable selon les techniques classiques de recyclage des matériaux thermoplastiques. Par exemple, il peut s'agir des techniques qui mettent notamment en oeuvre une étape de broyage, puis un moulage par injection de matériaux thermoplastiques. L'inventeur de la présente invention a en effet constaté que ladite pièce moulée se comportait comme tout matériau thermoplastique, à savoir qu'après broyage, cette pièce pouvait parfaitement refondre dans le fourreau d'une vis de plastification.

En outre, lorsque le mélange de l'étape a) est dépourvu de composants auxiliaires, en d'autres termes qu'il est constitué essentiellement des granulés de matériau thermoplastique et de pastilles de déchets de peinture en poudre thermodurcissables, la pièce moulée avec le procédé de recyclage selon l'invention présente au cours du moulage un faible retrait, voire un retrait nul. Cela est parfaitement avantageux pour la mise en oeuvre du moulage par injection. Ainsi, l'incorporation des pastilles de déchets de peintures en poudre thermodurcissables au sein du matériau thermoplastique au cours du procédé de recyclage selon l'invention présente également l'avantage de ne pas avoir de conséquence sur le retrait lors du moulage par injection dudit matériau thermoplastique.

L'invention sera mieux comprise à l'aide de la description détaillée qui est exposée ci-dessous en référence au dessin annexé représentant, à titre d'exemple non limitatif, des résultats expérimentaux sur les propriétés mécaniques de pièces moulées par injection avec le procédé de recyclage selon l'invention.
La figure 1 représente un diagramme du Module de Young de pièces en polypropylène de grade 12 (ci-après abrégé « PP 12 ») moulées par injection avec le procédé de recyclage selon l'invention en fonction de la teneur massique en pastilles de déchets de peintures en poudre.
La figure 2 représente un diagramme du Module de Young de pièces en polyéthylène de grade 8 (ci-après abrégé « PE 8 ») moulées par injection avec le procédé de recyclage selon l'invention en fonction de la teneur massique en pastilles de déchets de peintures en poudre.
La figure 3 représente un diagramme de l'allongement à la rupture de ces pièces en PP 12 en fonction de la teneur massique en lesdites pastilles.
La figure 4 représente un diagramme de l'allongement à la rupture de ces pièces en PE 8 en fonction de la teneur massique en lesdites pastilles.
La figure 5 représente un diagramme de la contrainte à la rupture de ces pièces en PP 12 en fonction de la teneur massique en lesdites pastilles.
La figure 6 représente un diagramme de la contrainte à la rupture de ces pièces en PE 8 en fonction de la teneur massique en lesdites pastilles.

### PARTIE EXPERIMENTALE :

Des expérimentations ont été réalisées avec des pastilles qui ont été fabriquées à partir de déchets de peintures en poudre thermodurcissables. Lesdites pastilles avaient la composition suivante exprimée en pourcentages massiques exprimés par rapport à la masse totale d'une pastille :
- 73,8% de résine polyester;
- 16,2% de résine époxy ;
- 3% d'additifs contenant un mélange de polyacrylate et de benzoïne ;
- 5% de charges contenant un mélange de carbonate de calcium et d'oxyde de silice ;
- 2% de pigments qui étaient des oxydes de fer.

Ces pastilles ont été ajoutées selon différentes teneurs massiques pour le moulage par injection de polypropylènes (ci-après abrégé « PP ») et polyéthylènes (ci-après abrégé « PE ») qui présentaient différents grades. Plus précisément, les grades 2, 8, 12, 16 et 30 de ces deux polymères ont été testés.

Les pastilles ont été incorporées selon les teneurs massiques suivantes : 5, 10, 15, 20, 25 et 30%. Ces teneurs massiques représentent la masse desdites pastilles par rapport à la masse du mélange constitué par les granulés du polymère thermoplastique (PP ou PE) et lesdites pastilles. Par exemple, un taux de 5% signifie que la masse des pastilles incorporées dans la trémie d'alimentation correspondait à 5% de la masse du mélange qui contenait donc en outre 95% de polymère thermoplastique (PP ou PE).

Le grade d'un polymère est une façon de caractériser la fluidité dudit polymère à chaud, c'est-à-dire aux alentours de 220°C.

Le principe de la mesure du grade ou autrement dit de l'indice de fluidité à chaud (abrégé selon l'acronyme « IFC »), repose sur la mesure de la masse de matière thermoplastique traversant une filière donnée (diamètre de 1,16 à 2,1mm) sous l'action d'une pression définie (masse), pendant un temps donné (120 à 600 secondes) et à une température fixée selon les NFT51-016 et ISO 1133. Par exemple pour les PP, la masse est de 2 kg, la température de 230°C, le diamètre de filière de 2,1 mm et le temps de 600 secondes. L'indice de fluidité à chaud correspond à la longueur d'écoulement. Cet indice varie de 0,1 à 1 pour de l'extrusion et doit être supérieur à 4 pour de l'injection. Les grades standards sont compris entre 8 à 20.

Au cours de ces expérimentations, la capacité à réaliser sans problème une série de moulages par injection avec le procédé de recyclage a été validée.

A chaque combinaison de polymère thermoplastique et de teneur massique des pastilles, des réglages de la presse à injecter équipée d'une vis de plastification ont été effectués.

La presse à injecter qui a été utilisée au cours des expérimentations était une presse commercialisée par la société BILLION sous la dénomination commerciale DIXIT 500.

Plus la teneur massique des pastilles était importante, plus la température du mélange dans la vis de plastification, en particulier en fin de vis de plastification devait être faible. En effet, la réticulation (qui est particulièrement importante en fin de vis de plastification) apporte localement une chaleur supplémentaire.

De plus, il a été constaté que le grade du polymère thermoplastique (autrement dit sa fluidité) était à prendre en compte pour la mise au point des paramètres d'injection. En effet, pour des grades élevés, avec des teneurs massiques de pastilles élevées, des problèmes de dosage peuvent être rencontrés qui nécessitent d'adapter les paramètres d'injection. Avec des grades bas (à savoir un polymère visqueux), les pastilles de déchets de peintures ont pour effet d'améliorer le remplissage du moule.

La détermination des paramètres d'injection est parfaitement à la portée de l'homme du métier qui saura, à partir d'essais de routine, les choisir de manière appropriée en fonction du grade du matériau thermoplastique et de la quantité de pastilles qu'il ajoute au mélange.

Au cours de ces expérimentations, au début de la vis de plastification (à savoir à proximité de la trémie d'alimentation), la température était de 40°C. Ensuite, sur les tronçons suivants de la vis de plastification, la température était de 200°C, 220°C, puis de 230°C.

La pression à la sortie de la vis de plastification était de 350 bars.

Au cours de ces expérimentations, la pièce en matériau thermoplastique moulée par injection avait une taille de 100 x 100 mm et une épaisseur de 2 mm.

Dans les tableaux 1 et 2 ci-dessous sont détaillés les résultats des injections en fonction des teneurs massiques des pastilles et des polymères injectés.

Le résultat « OK » signifie que l'injection a été validée : une série de 20 pièces minimum a pu être réalisée en automatique (à savoir sans intervention sur la presse à injecter). Cela correspond à des conditions de processus d'injection en séries qui sont parfaitement normales et appropriées pour obtenir une bonne cadence industrielle, donc une excellente productivité.

Le résultat « Bien » signifie que des réglages de la presse à injecter ont été nécessaires pour réaliser des séries d'au moins 20 pièces.

Le résultat « Moyen » signifie que l'on a obtenu des pièces, mais en nécessitant un nombre important de réglages de la presse à injecter; ce qui a limité le nombre de pièces obtenues par série et conférait au procédé de moulage un intérêt moindre du point de vue de sa productivité.

**Tableau 1 détaillant les résultats d'injection sur du polypropylène**

| Teneur massique des pastilles | PP grade 2 | PP grade 8 | PP grade 12 | PP grade 16 | PP grade 30 |
|---|---|---|---|---|---|
| 5% | OK | OK | OK | OK | OK |
| 10% | OK | OK | OK | OK | OK |
| 15% | OK | OK | OK | OK | OK |
| 20% | OK | OK | OK | OK | Bien |
| 25% | Bien | Bien | Bien | Bien | Moyen |
| 30% | Bien | Bien | Moyen | Moyen | Moyen |

**Tableau 2 détaillant les résultats d'injection sur du polyéthylène**

| Teneur massique des pastilles | PE grade 2 | PE grade 8 | PE grade 12 | PE grade 16 | PE grade 30 |
|---|---|---|---|---|---|
| 5% | OK | OK | OK | OK | OK |
| 10% | OK | OK | OK | OK | OK |
| 15% | OK | OK | OK | OK | OK |
| 20% | OK | OK | OK | OK | Bien |
| 25% | Bien | Bien | Bien | Bien | Moyen |
| 30% | Bien | Bien | Moyen | Moyen | Moyen |

Au vu des résultats des tableaux 1 et 2, on constate qu'on obtient les mêmes résultats avec du PP ou du PE.

Plus le grade du polymère thermoplastique est élevé, plus il est avantageux, afin d'obtenir une cadence de production élevée des pièces moulées, que la teneur massique en pastilles soit faible. En effet, pour des grades élevés avec des teneurs massiques de pastilles élevées, les réglages de la presse à injecter amoindrissent la productivité de la fabrication des pièces moulées avec le procédé de recyclage selon l'invention.

D'autres expérimentations ont été réalisées avec des pastilles dont la composition, exprimée en pourcentages massiques par rapport à la masse totale d'une pastille, était la suivante :
- 60,3% de résine polyester;
- 29,7% de résine époxy ;
- 3% d'additifs contenant un mélange de polyacrylate et de benzoïne ;
- 5% de charges contenant un mélange de carbonate de calcium et d'oxyde de silice ;
- 2% de pigments qui étaient des oxydes de fer.

Des résultats similaires à ceux détaillés dans les tableaux 1 et 2 ont été obtenus. L'injection a pu être réalisée en nécessitant parfois quelques réglages. Cela témoigne que le procédé de recyclage selon l'invention peut être mis en oeuvre avec des compositions de peintures en poudre thermodurcissables variées.

Ensuite, les propriétés mécaniques des pièces moulées par injection avec le procédé de recyclage selon l'invention ont été déterminées.

Le tableau 3 ci-dessous détaille, en fonction de la teneur massique des pastilles (ayant la composition suivante : 73,8% de résine polyester; 16,2% de résine époxy; 3% d'additifs contenant un mélange de polyacrylate et de benzoïne ; 5% de charges contenant un mélange de carbonate de calcium et d'oxyde de silice ; 2% de pigments sous forme d'oxydes de fer) qui étaient contenues dans le mélange constitué desdites pastilles et des granulés de respectivement les polymères thermoplastiques suivants :
- un polyéthylène de grade 8 (PE 8);
- un polypropylène de grade 12 (PP 12),
la cote moyenne de la pièce moulée ainsi obtenue, et ce en comparaison avec une pièce moulée sans ces pastilles (teneur massique égale à 0%).

La pièce moulée par injection avait une taille de 100 x 100 mm. C'est pourquoi, dans le tableau 3 sont détaillées les cotes moyennes des pièces moulées qui ont été calculées à partir des mesures des dimensions desdites pièces.

**Tableau 3 détaillant les cotes des pièces moulées avec le procédé de recyclage selon l'invention**

| Teneur massique de pastilles | PE 8 Cote en mm | PP 12 Cote en mm |
|---|---|---|
| 0% | 101,2 | 100,6 |
| 5% | 101 | 100,5 |
| 10% | 101,5 | 100,2 |
| 20% | 101,3 | 100,8 |
| 30% | 101,2 | 100,7 |
| 40% | 101,4 | 100,1 |
| 50% | 101,5 | 100,9 |

Au vu des résultats du tableau 3, on constate que le retrait reste inchangé.

Le tableau 3 témoigne ainsi que la présence de pastilles de déchets de peintures en poudre thermodurcissables dans le mélange de l'étape a) du procédé de recyclage selon l'invention n'a pas d'impact sur les cotes de la pièce moulée par injection. En d'autres termes, lesdites pastilles n'influencent pas sur le retrait du matériau thermoplastique lors de son moulage. Le fait que lesdites pastilles n'induisent pas de retrait est particulièrement avantageux lors de la conception du moulage par injection de la pièce en matériau thermoplastique.

Ensuite, le module de Young, l'allongement à la rupture, la contrainte à la rupture et la résistance aux chocs ont été déterminés sur ces pièces moulées par injection avec le procédé de recyclage selon l'invention.

Par « module de Young », on entend, le module sécant déterminé par une déformation conventionnelle, suivant le test de traction des thermoplastiques, selon la norme NFT 51-034. Le test a été réalisé sur une éprouvette normalisée suivant cette norme de dimension 150 x 20 x 4 mm, de section de casse de 10 x 4 mm. Les éprouvettes ont été moulées par injection comme préconisé par la norme.

La contrainte de rupture, ainsi que l'allongement à la rupture ont été déterminés suivant cette même norme (NFT 51-034), avec le même essai de traction.

Par résistance aux chocs, on entend, la mesure de résilience suivant le test Charpy, selon la norme NFT 51-035. L'éprouvette utilisée a été moulée suivant les préconisations normalisées. Le test a été fait pour une éprouvette non entaillée, à température ambiante (20°C).

Le tableau 4 ci-dessous détaille le module de Young, l'allongement à la rupture et la contrainte à la rupture en fonction de la teneur massique de pastilles dans la pièce en PP 12.

**Tableau 4 détaillant le Module de Young, l'allongement à la rupture et la contrainte à la rupture en fonction de la teneur massique de pastilles dans la pièce en PP 12**

| % de pastille | Module de Young (MPa) | Allongement à la rupture (%) | Contrainte à la rupture (MPa) |
|---|---|---|---|
| 0% | 1350 | 73 | 16 |
| 10% | 1394 | 41 | 18 |
| 15% | 1431 | 31 | 18 |
| 20% | 1470 | 25 | 20 |
| 25% | 1512 | 19 | 20 |
| 30% | 1542 | 13 | 22 |

Le tableau 5 ci-dessous détaille le module de Young, l'allongement à la rupture et la contrainte à la rupture en fonction de la teneur massique de pastilles dans la pièce en PE 8.

**Tableau 5 détaillant le module de Young, l'allongement à la rupture et la contrainte à la rupture en fonction de la teneur massique de pastilles dans la pièce en PE de grade 8**

| % de pastille | Module de Young (MPa) | Allongement à la rupture (%) | Contrainte à la rupture (MPa) |
|---|---|---|---|
| 0% | 800 | 88 | 13 |
| 10% | 886 | 55 | 15 |
| 15% | 944 | 43 | 16 |
| 20% | 999 | 39 | 18 |
| 25% | 1067 | 35 | 19 |
| 30% | 1120 | 29 | 19 |

Ces propriétés mécaniques sont également présentées sur :

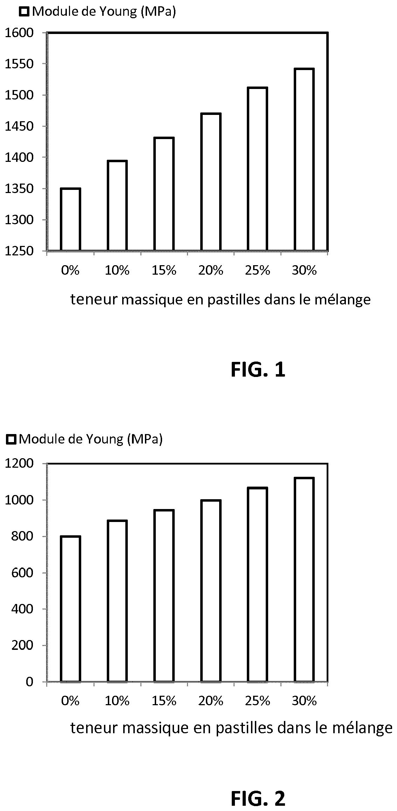

- la figure 1 qui représente un diagramme du module de Young (exprimé en MPa) de ces pièces en PP 12 moulées par injection avec le procédé de recyclage selon l'invention en fonction de la teneur massique en les pastilles ;
- la figure 2 qui représente un diagramme du module de Young de ces pièces en PE 8 moulées par injection avec le procédé de recyclage selon l'invention en fonction de la teneur massique en lesdites pastilles ;

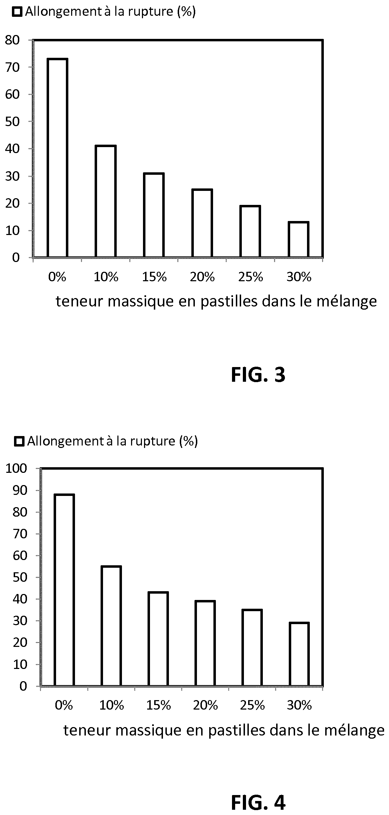

- la figure 3 qui représente un diagramme de l'allongement à la rupture (exprimé en pourcentage) de ces pièces en PP 12 moulées en fonction de la teneur massique en les pastilles ;
- la figure 4 qui représente un diagramme de l'allongement à la rupture de ces pièces en PE 8 en fonction de la teneur massique en les pastilles ;

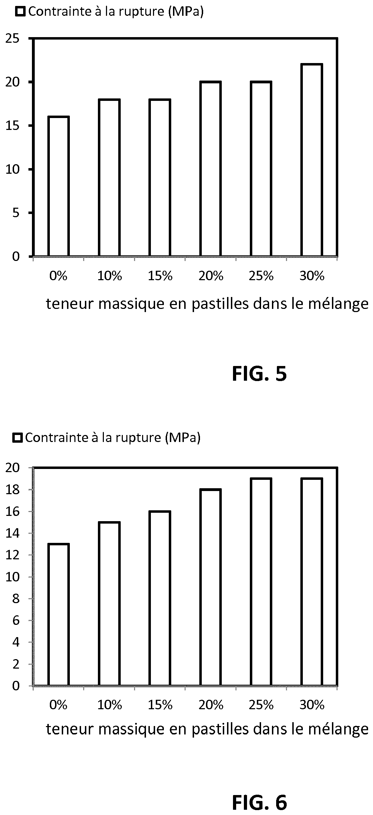

- la figure 5 qui représente un diagramme de la contrainte à la rupture (exprimée en MPa) de ces pièces en PP 12 en fonction de la teneur massique en les pastilles ;
- la figure 6 qui représente un diagramme de la contrainte à la rupture de ces pièces en PE 8 en fonction de la teneur massique en les pastilles.

Au vu de ces résultats présentés dans les tableaux 4 et 5 et représentés sur les figures 1 à 6, on constate que :
- plus la teneur massique en pastilles est élevée, plus le module de Young est élevé ;
- plus la teneur massique en pastilles est élevée, plus le pourcentage de l'allongement à la rupture diminue ;
- plus la teneur massique en pastilles est élevée, plus la contrainte à la rupture augmente.

La présence de pastilles de déchets de peinture en poudre thermodurcissables dans le mélange de l'étape a) pour le moulage par injection de matériau thermoplastique améliore les propriétés mécaniques de la pièce moulée ainsi obtenue.

L'augmentation des propriétés mécaniques de la pièce moulée avec le procédé de recyclage selon l'invention est en moyenne d'environ 20 % par rapport à la pièce moulée en matériau thermoplastique équivalent mais dans lequel n'ont pas été ajoutées des pastilles de déchets de peintures en poudre thermodurcissables. Ce pourcentage d'augmentation des propriétés mécaniques peut être plus important, et atteindre même la valeur de 50%. Cela est le cas lorsque les propriétés mécaniques du matériau thermoplastique en tant que tel sont faibles. Les pastilles de déchets de peintures en poudre thermodurcissables ont alors un véritable impact sur les propriétés mécaniques de la pièce moulée en matériau thermoplastique.

Le tableau 6 ci-dessous les résultats de résistance au choc des pièces moulées en PP 12 décrites ci-dessus en fonction de la teneur massique en les pastilles (à savoir de composition : 73,8% de résine polyester; 16,2% de résine époxy; 3% d'additifs contenant un mélange de polyacrylate et de benzoïne ; 5% de charges contenant un mélange de carbonate de calcium et d'oxyde de silice ; 2% de pigments sous forme d'oxydes de fer).

**Tableau 6 détaillant les résultats de résistance au choc**

| **Essais** | **Résistance au choc (KJ/m2)** | **Type de rupture** |
|---|---|---|
| 0% | / | Pas de casse |
| 10% | / | Pas de casse |
| 20% | / | Pas de casse |
| 30% | 12 | Rupture fragile |

Au vu des résultats du tableau 6, on relève que la résistance au choc de la pièce PP 12 moulée par injection selon le procédé de recyclage selon l'invention est peu modifiée en comparaison avec celle d'une pièce moulée en PP 12 mais en l'absence desdites pastilles. A partir d'une teneur massique de 30% desdites pastilles, les pièces moulées en PP 12 peuvent commencer à devenir un peu fragiles.

En général, sur tous les matériaux, la résistance aux chocs diminue avec l'augmentation du module de Young. Sur les pièces moulées selon le procédé de recyclage selon l'invention, on retrouve ce phénomène, mais de façon moindre. En effet, la rigidité (c'est-à-dire le module de Young) et le choc sont deux propriétés mécaniques contradictoires. La conservation de la résistance au choc associée à un module de Young élevée est une caractéristique recherchée des matériaux. Les pièces moulées avec le procédé de recyclage selon l'invention présentent cet avantage.

Ensuite, des tests de vieillissement accéléré ont été réalisés sur ces mêmes pièces moulées en PP 12 selon le procédé de recyclage selon l'invention.

Le principe a consisté à placer des échantillons de ces pièces moulées sous des lampes argon, pour simuler une exposition au soleil. En plus, un filet d'eau (1 litre/minute) coulait sur l'échantillon. Le test a duré plusieurs mois. Tous les mois, les échantillons ont été analysés, de manière visuelle, puis mécanique avec des tests de traction.

Selon ce protocole expérimental d'exposition sous des lampes argon : un mois de test correspondait environ à un an d'exposition dans des conditions naturelles sous climat tempéré (par exemple en France).

Le tableau 7 détaille ci-dessous les résultats de contrainte à la rupture des différents échantillons en fonction du temps et de la teneur massiques des pastilles dans la pièce moulée en PP 12.

**Tableau 7 détaillant les résultats de contrainte à la rupture des échantillons de pièces en PP 12 moulées selon le procédé de recyclage selon l'invention en comparaison avec une pièce dépourvue de pastilles**

| Mois de test | 0% | 10% | 20% | 30% |
|---|---|---|---|---|
| 0 | Rupture 14 MPa | Rupture 16 MPa | Rupture 18 MPa | Rupture 20 MPa |
| 0,5 | Rupture 12 MPa | Rupture 16 MPa | Rupture 18 MPa | Rupture 20 MPa |
| 1 | Rupture directe Le matériau est friable | Rupture 15 MPa La surface s'est blanchie | Rupture 18 MPa | Rupture 20MPa |
| 1,5 | | Rupture 15 MPa | Rupture 18 MPa | Rupture 19 MPa |
| 2 | | Rupture 14 Mpa | Rupture 17 MPa | Rupture 19 MPa |
| 2,5 | | Rupture 14 MPa | Rupture 14 MPa | Rupture 17 MPa |
| 3 | | Rupture 13 MPa | Rupture 15 MPa | Rupture 18 MPa |
| 3,5 | | Rupture 11Mpa | Rupture 15 MPa | Rupture 16 MPa |
| 4 | | Rupture 10 Mpa | Rupture 14 MPa | Rupture 16 MPa |

Les résultats du tableau 7 pour les pièces en PP 12 moulées selon le procédé de recyclage selon l'invention sont excellents.

Lorsque les pièces en PP 12 ont été moulées avec des pastilles de déchets de peintures en poudre thermodurcissables, on relève une nette amélioration de la résistance aux UV.

La surface a rapidement blanchi, l'aspect de surface a été impacté.

Cependant, les résistances mécaniques ont été conservées.

La baisse des propriétés mécaniques est inéducable : on obtient les mêmes pertes avec un additif anti-UV. Cependant, les pertes avec des pièces moulées en PP 12 moulées avec le procédé de recyclage sont de l'ordre de 30% en 4 ans (ce qui correspond donc à 4 mois de test), ce qui est remarquable.

Le polyester contenu dans les pastilles doit créer des barrières à l'intérieur de la pièce. En surface, ce polymère se dégrade et blanchit.

Le paramètre de l'épaisseur de la pièce est à prendre en considération : une pièce trop mince peut se dégrader rapidement.

Un test équivalent à été réalisé, mais en condition réelles. Les résultats sont similaires.

Pour ce faire, des mêmes pièces ont été placées dehors en plein soleil et exposées aux intempéries.

Au bout d'un an, la pièce moulée en l'absence de pastilles de déchets de peintures en poudre thermodurcissables était cassante, alors que les pièces moulées selon le procédé de recyclage selon l'invention ont maintenu leurs propriétés mécaniques. Les pièces sont légèrement blanchies.

Au bout de trois ans, les échantillons de pièces moulées selon l'invention ne sont toujours pas cassants. Les propriétés mécaniques se sont légèrement dégradées. La couleur reste blanchie mais a très peu évolué par rapport à la première année d'exposition.

Par ailleurs, des essais comparatifs ont été réalisés avec un dispositif de moulage par injection équipé d'un vérin d'injection, à savoir un dispositif comme ceux décrits dans les documents de brevet japonais cités ci-dessus. Ainsi, dans ces expérimentations comparatives, la réticulation de la résine thermodurcissable se produisait dans le moule après l'étape de moulage de la pièce moulée.

Le dispositif utilisé était un dispositif commercialisé par la société REP INTERNATIONAL.

Les deux mêmes compositions de pastille telles que celles décrites ci-dessus ont été incorporées selon les teneurs massiques de 5, 10 et 15% aux mêmes polypropylènes et polyéthylènes que ceux décrits ci-dessus pour obtenir des pièces moulées avec ce dispositif de moulage par injection équipé d'un vérin d'injection.

Le cylindre (à savoir le corps du vérin) dans lequel a été disposé le mélange de pastilles et de matériau thermoplastique a été chauffé à 220°C. La pression était de 10 bars.

Les pièces moulées ainsi obtenues n'étaient pas satisfaisantes pour les raisons suivantes :
- elles n'étaient pas homogènes ;
- elles étaient poreuses (des bulles étaient visibles à l'intérieur de ces pièces).

## Revendications

1. Procédé de recyclage des déchets de peintures en poudre thermodurcissables qui est réalisé dans un dispositif de moulage par injection qui est équipé d'une vis de plastification d'une pièce en un matériau thermoplastique et qui comprend au moins les étapes suivantes :
a) on dispose d'un mélange contenant des pastilles de déchets de peintures en poudre thermodurcissables, des granulés de matériau thermoplastique ;
b) on alimente la vis de plastification dudit dispositif de moulage par injection avec ledit mélange ;
c) on achemine ledit mélange à l'avant de la vis de plastification ; puis
d) on injecte ledit mélange à l'intérieur d'un moule présentant la forme souhaitée de la pièce à mouler de manière à obtenir une pièce moulée en le matériau thermoplastique.

2. Procédé de recyclage selon la revendication 1, **caractérisé en ce que** le mélange de l'étape a) comprend en outre au moins un composant auxiliaire et que :
- une première partie de ce composant auxiliaire a été incorporée dans le matériau thermoplastique au cours de la fabrication des granulés de matériau thermoplastique et la seconde partie de ce composant auxiliaire est incorporée dans la trémie d'alimentation dudit dispositif de moulage par injection,
ou
- la totalité de ce composant auxiliaire a été incorporée dans le matériau thermoplastique au cours de la fabrication des granulés de matériau thermoplastique,
ou
- la totalité de ce composant auxiliaire est incorporée dans la trémie d'alimentation du dispositif de moulage par injection.

3. Procédé de recyclage selon la revendication 1 ou 2, **caractérisé en ce que** lesdites pastilles contiennent, en pourcentages massiques exprimés par rapport à la masse totale d'une pastille, au moins :
- entre 6% et 91%, de préférence entre 40% et 80%, de résine polyester ;
- entre 0% et 40%, de préférence entre 0% et 15%, de résine époxy.

4. Procédé de recyclage selon la revendication 3, **caractérisé en ce que** lesdites pastilles contiennent en outre, en pourcentages massiques exprimés par rapport à la masse totale d'une pastille :
- entre 2% et 5% d'additif;
- entre 5% et 80%, de préférence entre 10% et 50%, de charge ;
- entre 2% et 5% de pigment.

5. Procédé de recyclage selon l'une quelconque des revendications 1 à 4, **caractérisé en ce que** le mélange de l'étape a) contient au maximum 50% de pastilles, ce pourcentage étant un pourcentage massique exprimé par rapport à la masse totale dudit mélange.

6. Procédé de recyclage selon la revendication 5, **caractérisé en ce que** le mélange de l'étape a) contient entre 10% et 30% de pastilles, ces pourcentages étant des pourcentages massiques exprimés par rapport à la masse totale dudit mélange.

7. Procédé de recyclage selon l'une quelconque des revendications 1 à 6, **caractérisé en ce que** lesdites pastilles ont des dimensions comprises entre 1 mm et 5 mm, une épaisseur comprise entre 2 mm et 5 mm et une densité comprise entre 1,2 et 1,5.

8. Procédé de recyclage selon l'une quelconque des revendications 1 à 7, **caractérisé en ce que** lesdites pastilles comprennent en outre au moins un composé complémentaire choisi parmi le talc, le carbonate de calcium, le noir de carbone, les additifs anti ultra-violets, le polyuréthane, les fibres textiles, les composites comprenant des fibres de verre et une résine époxy réticulée, les latex et les caoutchoucs.

9. Procédé de recyclage selon l'une quelconque des revendications 2 à 8, **caractérisé en ce que** le au moins un composant auxiliaire est choisi parmi les plastifiants, les charges, les pigments, les antioxydants, les stabilisants, les ignifugeants, les lubrifiants et les antistatiques.

10. Procédé de recyclage selon l'une quelconque des revendications 1 à 9, **caractérisé en ce que** les granulés de matériau thermoplastique comprennent au moins un matériau thermoplastique choisi parmi les polyoléfines, les polyvinyliques, les polystyréniques, les polyacryliques et polyméthacryliques, les polyacétals, les polyamides, les polycarbonates, les polyesters linéaires, les cellulosiques, les polymères fluorés, les polysulfones et les polysulfures de phénylène.

## Patentansprüche

1. Verfahren zum Recyceln der Abfälle von wärmehärtbaren Pulverlacken, das in einer Spritzgussvorrichtung ausgeführt wird, die mit einer Plastifizierschnecke eines Werkstücks aus einem thermoplastischen Material ausgerüstet ist, und das mindestens die folgenden Schritte umfasst:
a) es steht ein Gemisch zur Verfügung, das Pellets aus Abfällen von wärmehärtbaren Pulverlacken, Granulate aus thermoplastischem Material enthält;
b) die Plastifizierschnecke der Spritzgussvorrichtung wird mit dem Gemisch beschickt;
c) das Gemisch wird zur Vorderseite der Plastifizierschnecke befördert; und anschließend
d) wird das Gemisch in das Innere einer Form eingespritzt, die die gewünschte Gestalt des zu formenden Werkstücks aufweist, um ein geformtes Werkstück aus dem thermoplastischen Material zu erhalten.

2. Recyclingverfahren nach Anspruch 1, **dadurch gekennzeichnet, dass** das Gemisch aus dem Schritt a) weiter mindestens eine Hilfskomponente umfasst, und dass:
- ein erster Teil dieser Hilfskomponente im Laufe der Herstellung der Granulate aus thermoplastischem Material in das thermoplastische Material eingebracht wurde, und der zweite Teil dieser Hilfskomponente im Beschickungstrichter der Spritzgussvorrichtung eingebracht wird,
oder
- die Gesamtheit dieser Hilfskomponente im Laufe der Herstellung der Granulate aus thermoplastischem Material in das thermoplastische Material eingebracht wurde,
oder
- die Gesamtheit dieser Hilfskomponente im Beschickungstrichter der Spritzgussvorrichtung eingebracht wird.

3. Recyclingverfahren nach Anspruch 1 oder 2, **dadurch gekennzeichnet, dass** die Pellets in Massenprozent, in Bezug auf die Gesamtmasse eines Pellets ausgedrückt, mindestens enthalten:
- zwischen 6 % und 91 %, vorzugsweise zwischen 40 % und 80 % Polyesterharz;
- zwischen 0 % und 40 %, vorzugsweise zwischen 0 % und 15 % Epoxidharz.

4. Recyclingverfahren nach Anspruch 3, **dadurch gekennzeichnet, dass** die Pellets in Massenprozent, in Bezug auf die Gesamtmasse eines Pellets ausgedrückt, weiter enthalten:
- zwischen 2 % und 5 % Zusatzstoff;
- zwischen 5 % und 80 %, vorzugsweise zwischen 10 % und 50 % Füllstoff;
- zwischen 2 % und 5 % Pigment.

5. Recyclingverfahren nach einem der Ansprüche 1 bis 4, **dadurch gekennzeichnet, dass** das Gemisch aus dem Schritt a) maximal 50 % Pellets enthält, wobei dieser Prozentanteil ein Massenprozentanteil, in Bezug auf die Gesamtmasse des Gemisches ausgedrückt, ist.

6. Recyclingverfahren nach Anspruch 5, **dadurch gekennzeichnet, dass** das Gemisch aus dem Schritt a) zwischen 10 % und 30 % Pellets enthält, wobei diese Prozentanteile Massenprozentanteile, in Bezug auf die Gesamtmasse des Gemisches ausgedrückt, sind.

7. Recyclingverfahren nach einem der Ansprüche 1 bis 6, **dadurch gekennzeichnet, dass** die Pellets Abmessungen im Bereich zwischen 1 mm und 5 mm, eine Dicke im Bereich zwischen 2 mm und 5 mm, und eine Dichte im Bereich zwischen 1,2 und 1,5 aufweisen.

8. Recyclingverfahren nach einem der Ansprüche 1 bis 7, **dadurch gekennzeichnet, dass** die Pellets weiter mindestens eine komplementäre Verbindung umfassen, ausgewählt aus Talk, Calciumcarbonat, Ruß, UV-Schutz-Zusatzstoffen, Polyurethan, Textilfasern, Verbundstoffen, die Glasfasern und ein vernetztes Epoxidharz umfassen, Latizen und Kautschuken.

9. Recyclingverfahren nach einem der Ansprüche 2 bis 8, **dadurch gekennzeichnet, dass** die mindestens eine Hilfskomponente ausgewählt ist aus Weichmachern, Füllstoffen, Pigmenten, Antioxidantien, Stabilisatoren, Flammschutzmitteln, Schmiermitteln und Antistatika.

10. Recyclingverfahren nach einem der Ansprüche 1 bis 9, **dadurch gekennzeichnet, dass** die Granulate aus thermoplastischem Material mindestens ein thermoplastisches Material umfassen, ausgewählt aus Polyolefinen, Polyvinylverbindungen, Polystyrolverbindungen, Polyacrylverbindungen und Polymethacrylverbindungen, Polyacetalen, Polyamiden, Polycarbonaten, linearen Polyestern, Zelluloseverbindungen, fluorierten Polymeren, Polysulfonen und Polyphenylensulfiden.

## Claims

1. A method for recycling thermosetting powder paint wastes which is carried out in an injection molding device which is equipped with a screw for plasticizing a part made of a thermoplastic material and which comprises at least the following steps:
a) a mixture is provided containing pellets of thermosetting powder paint wastes, granules of thermoplastic material;
b) the plasticizing screw of said injection molding device is fed with said mixture;
c) said mixture is led to the front of the plasticizing screw; then
d) said mixture is injected into a mold having the desired shape of the part to be molded so as to obtain a molded part made of the thermoplastic material.

2. The recycling method according to claim 1, **characterized in that** the mixture of step a) further comprises at least one auxiliary component and that:
- a first portion of this auxiliary component has been incorporated in the thermoplastic material during the manufacture of the granules of thermoplastic material and the second portion of this auxiliary component is incorporated in the feed hopper of said injection molding device,
or
- the entirety of this auxiliary component has been incorporated into the thermoplastic material during the manufacture of the thermoplastic material granules,
or
- the entirety of this auxiliary component is incorporated in the feed hopper of the injection molding device.

3. The recycling method according to claim 1 or 2, **characterized in that** said pellets contain, in weight percentages expressed with respect to the total mass of a pellet, at least:
- between 6% and 91%, preferably between 40% and 80%, of a polyester resin;
- between 0% and 40%, preferably between 0% and 15%, of an epoxy resin.

4. The recycling method according to claim 3, **characterized in that** said pellets further contain, in weight percentages expressed with respect to the total mass of a pellet:
- between 2% and 5% of an additive;
- between 5% and 80%, preferably between 10% and 50%, of a charge;
- between 2% and 5% of a pigment.

5. The recycling method according to any one of claims 1 to 4, **characterized in that** the mixture of step a) contains at most 50% of pellets, this percentage being a mass percentage expressed with respect to the total mass of said mixture.

6. The recycling method according to claim 5, **characterized in that** the mixture of step a) contains between 10% and 30% of pellets, these percentages being mass percentages expressed with respect to the total mass of said mixture.

7. The recycling method according to any one of claims 1 to 6, **characterized in that** said pellets have dimensions comprised between 1 mm and 5 mm, a thickness comprised between 2 mm and 5 mm and a density comprised between 1.2 and 1.5.

8. The recycling method according to any one of claims 1 to 7, **characterized in that** said pellets further comprise at least one complementary compound selected from talc, calcium carbonate, carbon black, anti-ultraviolet additives, polyurethane, textile fibers, composites comprising glass fibers and a cross-linked epoxy resin, latexes and rubbers.

9. The recycling method according to any one of claims 2 to 8, **characterized in that** the at least one auxiliary component is selected from plasticizers, charges, pigments, antioxidants, stabilizers, flame retardants, lubricants and antistatics.

10. The recycling method according to any one of claims 1 to 9, **characterized in that** the granules of thermoplastic material comprise at least one thermoplastic material selected from polyolefins, polyvinyls, polystyrenes, polyacrylics and polymethacrylics, polyacetals, polyamides, polycarbonates, linear polyesters, cellulosics, fluoropolymers, polysulfones and phenylene polysulfides.
